# EUROPEAN PATENT APPLICATION

(11) **EP 1 220 220 A2**
(43) Date of publication of application: **03.07.2002**
(21) Application number: 01310629.9
(22) Date of filing: 19.12.2001
(51) Int. Cl.: G11B 20/24

(54) **Filtering and interference removal**

(30) Priority: 28.12.2000 JP 2000402231; 15.01.2001 JP 2001006609
(71) Applicant: SONY CORPORATION, Tokyo 141 (JP)
(72) Inventor: Yata, Toru, c/o Sony Corporation, Tokyo 141 (JP); Hanagata, Tsutomu, c/o Sony Corporation, Tokyo 141 (JP); Itayama, Osamu, c/o Sony Corporation, Tokyo 141 (JP); Miyamoto, Takuya, c/o Sony Corporation, Tokyo 141 (JP); Arihara, Akihiro, c/o Sony Corporation, Tokyo 141 (JP); Takehara, Shintaro, c/o Sony Corporation, Tokyo 141 (JP); Takano, Naoto, c/o Sony Corporation, Tokyo 141 (JP)
(74) Representative: Pratt, Richard Wilson

(57) **Abstract**

An audio signal playback circuit includes an operational amplifier having an equalizer amplifier for amplifying a signal from a head, and filters, particularly a T-filter formed of coils and a capacitor, for detecting and attenuating the 900 MHz frequency band. The filters are provided at or before ports of a signal line and a power supply line which are electrically connected to the operational amplifier. A servo-control CTL signal playback circuit includes an amplifier circuit for amplifying a signal generated by playing back a CTL signal using a control head, the CTL signal being recorded in a recording medium, a servo control unit for controlling a servo in response to the signal amplified by the amplifier circuit, and a filter for detecting and attenuating the 900 MHz frequency band. The filter is provided at or before a port of a signal line for inputting the signal played back by the control head to the amplifier circuit. The filter in the audio signal playback circuit or the servo-control CTL signal playback circuit allows an interference signal having a low-frequency component in the 900 MHz band to be removed before it is amplified.

## Description

### BACKGROUND OF THE INVENTION

### 1. Field of the Invention

The present invention relates to audio signal playback circuit, audio device, electronic device, servo-control CTL signal playback circuit and servo control mechanism.

Embodiments of the present invention relate to an audio signal playback circuit and an audio device with interference removal, and to an electronic device having a servo-control CTL signal playback circuit and a servo control mechanism. More particularly, embodiments of the present invention relate to an audio signal playback circuit and an audio device having an interference removal feature which prevents interference, in which the 900 MHz frequency band is pulse-modulated at a low frequency, from entering an operational amplifier via a signal line and the like. Further embodiments of the present invention relate to an electronic device having a servo-control CTL signal playback circuit and a servo control mechanism.

### 2. Description of the Related Art

In the state of the art, interference removal mechanisms in audio signal playback circuits and servo-control CTL signal playback circuits include a mechanism (1) having a housing which is shielded in order to protect it against interference emission, and a mechanism (2) having a filter which filters an audio signal and a CTL signal which contain interference in order to remove interference. As known in the art, the mechanism (1) having a shielded housing employs a plastic panel coated with a conductive material or a metal panel to remove interference.

One interference emission regulation in GSM (Global System for Mobile communication) cellular telephones is the EN 55020/A12 standard. The EN 55020/A12 standard is an EMC (electromagnetic compatibility) related standard in the standards (concerning security, EMC, and the like) prepared by CENELEC (Comite Europeen de Normalisation Electrotechinque), and the EMS standard (STD) known as immunity corresponds to the EN 55020 standard. The EN 55020/A12 standard is an amendment taking the popularity of the GSM system in Europe into account in view of recent demands on correction or revision of the standards. More specifically, an electronic device, such as an audio circuit, or an electronic device having a servo control mechanism, e.g., a VTR, is installed in a shielded room, and an emission field is applied to the sample (VTR) to be measured. The influence of the emission field is studied to determine whether the standard is satisfied or not. A specific measurement technique is described later.

The standardization organizations for the EMC and security standards are classified into international standardization organizations, regional standardization organizations, domestic standardization organizations, and product standardization organizations. The international standardization organizations include IEC (International Electrotechnical Commission) and CISPR (Comite International Special des Perturbations Radioelectriques). The regional standardization organizations include NAFTA (North American Free Trade Agreement), the EU (European Union), and EFTA (European Free Trade Association). The United States, Canada, and Mexico follow the NAFTA standards. Germany, the United Kingdom, France, and twelve other countries follow the EU standards. Finland, Norway, Sweden, and three other countries follow the EFTA standards. The countries which follow the EU or EFTA standards participate in CENELEC, in which the products conform to the EN 55020 standard set by CENELEC.

The EN 55020 standard was amended in 2001, additionally including so-called immunity tests in conformity to the EN 55020 standard for regulating the resistance (interference removal capability) of a target product to interference emission from other device and the like. The regulation consists of four items including a "radio-frequency electromagnetic field carrier" test. This test was added in order to regulate the resistance to interference emission from GSM cellular telephones.

In this test, 900 MHz ± 5 MHz waves which are pulse-modulated at 200 Hz at a duty ratio of 50% are emitted as interference, like radio waves generated in a GSM device, from an antenna of a product, and are then applied to an audio device such as a VCR (video cassette recorder). The intensity of the applied interference emission has a regulation value of 3 V/m at a plane in close proximity to the antenna. The intensity of the interference emission is expressed as field intensity at a point 1.8 m away from a GSM device having a power of 2 W. Requirements to determine whether the product is acceptable or not include that an image recorded and played back under such interference emission should not suffer from interference such as beats and that the audio signal-to-noise ratio is 40 dB or more.

Referring to Fig. 1, one practical measurement approach to satisfy the various requirements is to provide a shielded room 20, and to provide measurement devices including an interference emission generator 21, an RF signal generator 22, a monitor 23, and an audio S/N meter 24. The interference emission generator 21 allows interference emission to be generated from an antenna 125 within the shielded room 20. The interference emission is modulated interference emission which is generated by pulse-modulating 900 MHz ± 5 MHz interference emission at 200 Hz at a duty ratio of 50%, as shown in Figs. 2 and 3.

The shielded room 20 accommodates a VCR set placed on a table having a height of 80 cm, and the field intensity of the interference emission generated from the antenna 125 which is connected to the interference emission generator 21 is set at 3 V/m at the end of the VCR set which is closer to the antenna 125. More specifically, the interference emission is measured while the front, the rear, and both sides of the VCR set face the antenna 125.

The determination requirements satisfy the following video and audio conditions at an interference level of 3 dB/m or less:
(1) There is no deterioration in picture quality such as beats on the monitor 23.
(2) The audio signal-to-noise ratio is 40 dB or more.

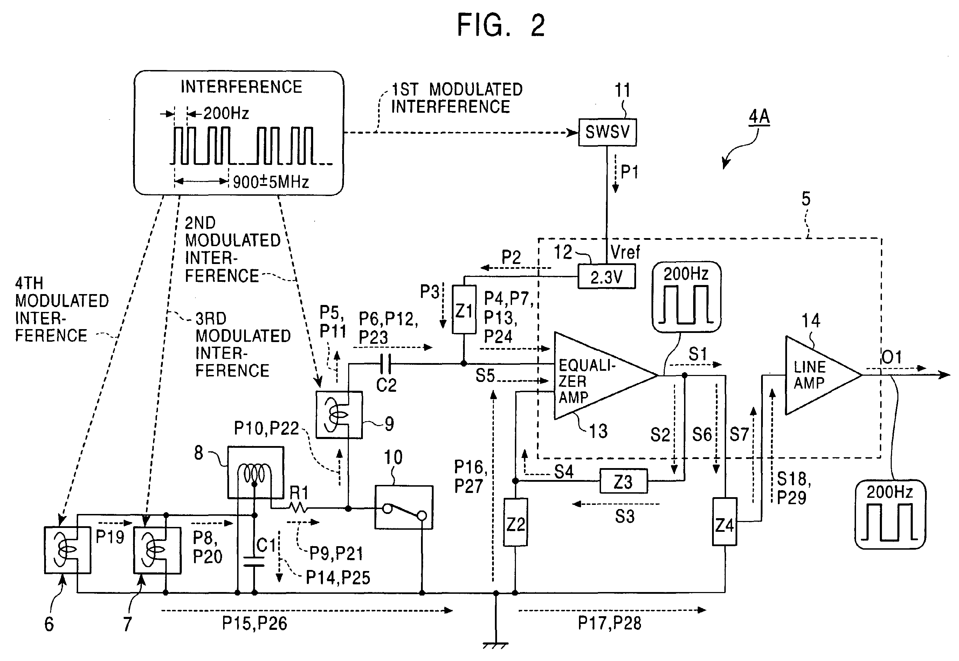

Referring to Fig. 2, the VCR set, namely, an audio player circuit 4A incorporated in an audio device, includes an operational amplifier circuit 5 which is incorporated in an audio IC connected to an audio erase head 6, a full erase head 7, and an audio head 9.

The operational amplifier circuit 5 includes a 2.3 V power supply 12 which receives a power supply voltage from a 5 V switching regulator 11 to generate a reference voltage of 2.3 V, an equalizer amplifier 13 which receives and amplifies signals from the heads 6, 7, and 9, and a line amplifier 14.

In the audio player circuit 4A, the audio erase head 6, the full erase head 7, and a capacitor C1 are connected in parallel to each other. The node between the full erase head 7 and the capacitor C1 is connected to the midpoint of a bias transformer 8. The bias transformer 8 has one end directly connected to the grounded end of the parallel connection of the audio erase head 6 and the full erase head 7, and the other end connected via a resistor R1 and a switch 10 to the grounded end of the parallel connection of the audio erase head 6 and the full erase head 7. The node between the switch 10 and the resistor R1 is connected to one end of the audio head 9. The other end of the audio head 9 is connected to a first input terminal of the equalizer amplifier 13 via a capacitor C2. The first input terminal of the equalizer amplifier 13 is connected to the 2.3 V power supply 12 via a load Z1. A second input terminal of the equalizer amplifier 13 is coupled to ground via a load Z2, and is also fed back through the output terminal thereof and a load Z3. The output terminal of the equalizer amplifier 13 is coupled to ground via a load Z4, and is also connected to the input terminal of the line amplifier 14 via the load Z4. The output terminal of the line amplifier 14 is connected to an external terminal (not shown).

In the operational amplifier circuit 5 having such a structure and connection, signals from the heads 6, 7, and 9 are amplified by the equalizer amplifier 13, and are then output through the line amplifier 14.

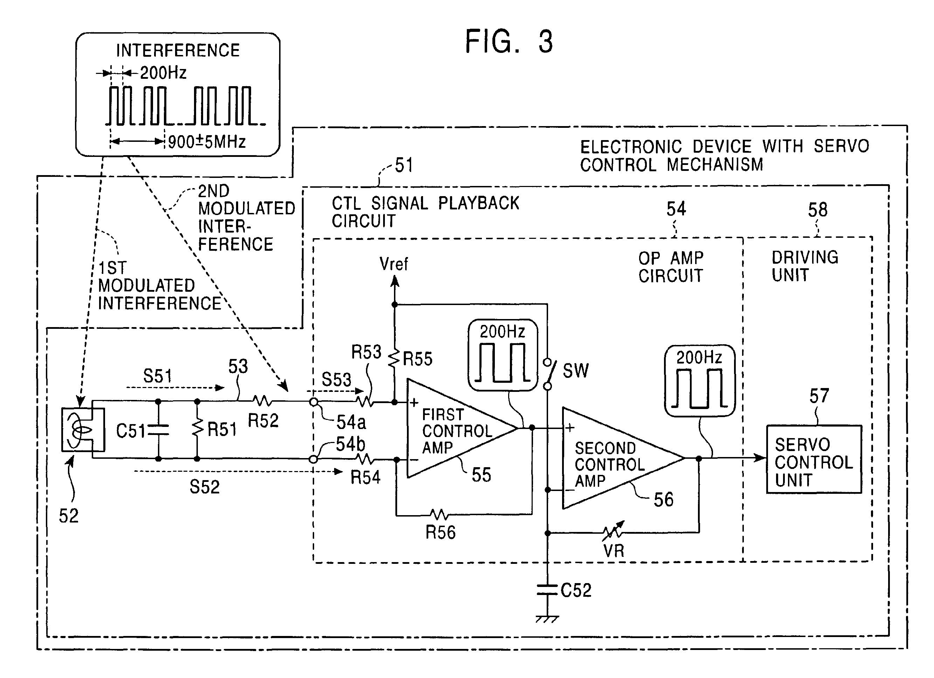

Referring to Fig. 3, an electronic device having a servo control mechanism at least includes a CTL signal playback circuit 51 for playing back a received signal provided by a control head 52, and a driving unit 58 including a servo control unit 57 for controlling a motor and the like in response to the CTL signal.

The CTL signal playback circuit 51 includes the control head 52 which plays back a CTL signal which is recorded in a servo control recording medium based on a CTL signal, and an operational amplifier circuit 54 connected to the control head 52 via a signal line 53.

The operational amplifier circuit 54 includes a first control amplifier 55 which receives and amplifies the signal from the control head 52 via the signal line 53, and a second control amplifier 56 which receives and amplifies the signal amplified by the first control amplifier 55 and a power supply voltage Vref.

In the CTL signal playback circuit 51, the control head 52, a capacitor C51, and a resistor R51 are connected in parallel to each other. A first end of the parallel connection is connected via a resistor R52 to an input terminal 54a of the operational amplifier circuit 54 which is coupled to the non-inverting input terminal of the first control amplifier 55, and a second end thereof is connected to an input terminal 54b of the operational amplifier circuit 54 which is coupled to the inverting input terminal of the first control amplifier 55.

In the operational amplifier circuit 54, the non-inverting input terminal of the first control amplifier 55 is connected to the first end of the control head 52 via the terminal 54a and a resistor R53, and the inverting input terminal thereof is connected to the second end of the control head 52 via the terminal 54b and a resistor R54.
The output terminal of the first control amplifier 55 is connected to the non-inverting input terminal of the second control amplifier 56. The inverting input terminal of the second control amplifier 56 is coupled to ground via a capacitor C52, and is also connected to the output terminal thereof via a variable resistor VR. The output terminal of the second control amplifier 56 is connected to the servo control unit 57 in the driving unit 58.

In the operational amplifier circuit 54 having such a structure and connection, a signal from the control head 52 is amplified by the first control amplifier 55 and the second control amplifier 56, and the amplified CTL signal is then delivered to the servo control unit 57.

However, the mechanism (1), as previously described, having a shielded housing in order to remove interference has experienced problems.

Specifically, the mechanism (1) which employs (a) a plastic panel coated with a conductive material may produce variations in the bonding state in mass production. Since it uses solvents etc., environmental concerns are taken into account. Furthermore, such a mechanism may be expensive because of the high unit cost.

The mechanism (1) employing (b) a metal panel may cause variations in the bonding state in mass production, and may be expensive because of the high unit cost. There may be further limitations when it is designed.

The mechanism (2), as previously described, including a filter which filters an audio signal containing interference in order to remove the interference has had a problem in that the frequency of an interference component (200 Hz and modulated wave thereof) enters the bandwidth of the audio signal, so that the interference component cannot be removed therefrom.

A description is now given as to how the modulated interference in which a frequency of 900 ± 5 MHz is modulated at 200 Hz at a duty ratio of 50%, as defined by the EN 55020/A12 standard, which is applied to the audio player circuit 4A previously described with reference to Fig. 2, may affect the power supply line and the signal line.
For illustration of the modulated interference which affects the circuit components, the modulated interference is classified into first modulated interference which affects the power supply line, second modulated interference which affects the signal line of the audio head 9, third modulated interference which affects the full erase head 7, and fourth modulated interference which affects the signal line of the audio erase head 6.

The first modulated interference affects the switching regulator 11 itself which supplies a 5 V voltage. A signal containing the interference signal in the power supply line is routed through the 2.3 V reference power supply 12 in the operational amplifier circuit 5 and the load Z1 to the equalizer amplifier 13, as depicted by arrows P1, P2, P3, and P4, in the stated order.

The second modulated interference affects the audio head 9. A signal containing the interference signal superimposed thereon in the signal line connected to the audio head 9 is routed through the capacitor C2 to the equalizer 13, as depicted by arrows P5, P6, and P7, in the stated order.

The third modulated interference affects the full erase head 7. A signal containing the interference signal superimposed thereon in the signal line connected to the full erase head 7 is routed through the bias transformer 8, the resistor R1, the audio head 9, and the capacitor C2 to the equalizer amplifier 13, as depicted by arrows P8, P9, P10, P11, P12, and P13, in the stated order. The signal containing the interference signal superimposed thereon in the full erase head 7 is also routed through the capacitor C1, the line coupled to ground, and the load Z2 to the equalizer amplifier 13, as depicted by arrows P8, P14, P15, and P16, in the stated order. The signal in the line coupled to ground is further routed through the load Z4 to the line amplifier 14, as depicted by arrows P15, P17, and P18, in the stated order.

The fourth modulated interference affects the audio erase head 6. A signal containing the interference signal in the signal line connected to the audio erase head 6 is routed through the bias transformer 8, the resistor R1, the audio head 9, and the capacitor C2 to the equalizer amplifier 13, as depicted by arrows P19, P20, P21, P22, P23, and P24, in the stated order. The signal containing the interference signal superimposed thereon in the audio erase head 6 is also routed through the capacitor C1, the line coupled to ground, and the load Z2 to the equalizer amplifier 13, as depicted by arrows P19, P20, P25, P26, and P27, in the stated order. The signal containing the interference signal in the line coupled to ground is further routed through the load Z4 to the line amplifier 14, as depicted by arrows P26, P28, and P29, in the stated order.

The interference signal entering the equalizer amplifier 13 in this way cannot be removed by the equalizer amplifier 13, and is therefore amplified as a signal before being fed back via the load Z3, as depicted by arrows S1, S2, S3, S4, in the stated order. The amplified signal is also input to the line amplifier 14 via the load Z4 as depicted by arrows S5, S6, and S7, in the stated order. The signal input to the line amplifier 14 contains the interference signal which is still not removed by the line amplifier 14, and is therefore output while containing the interference signal, as depicted by an arrow O1.

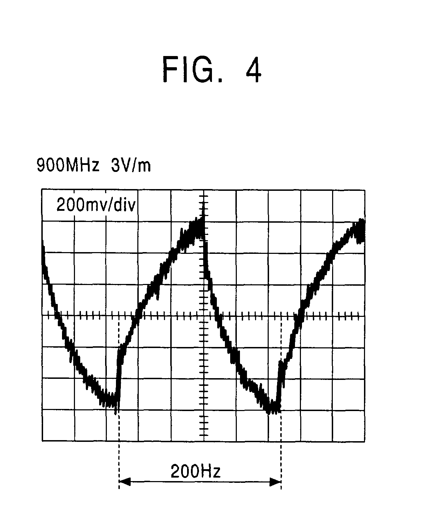

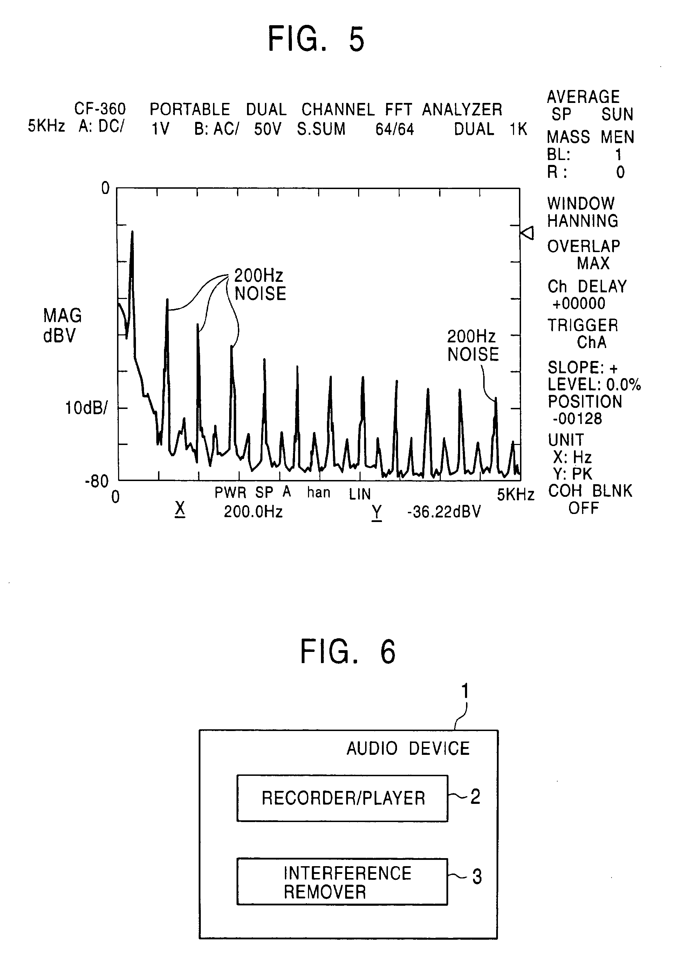

Accordingly, if interference is added during audio playback, interference which comes not only from a group of the player heads but also through a variety of paths is detected in the audio IC, namely, it is detected by the equalizer amplifier 13 and the line amplifier 14 in the operational amplifier circuit 5, and appears as a signal component of 200 Hz, as shown in Figs. 4 and 5. This may lead to a poor signal-to-noise ratio. The low-frequency component of 200 Hz is within the bandwidth of the real signal for use in the audio signal, and cannot be thus removed by filters. Therefore, it is extremely difficult to remove an interference signal which is input to the equalizer amplifier 13 serving to amplify signals, thus leading to lower signal accuracy. In Fig. 4, the interference signal of 200 Hz which is added together with the real signal is amplified to produce the peak signal. Once played back, the interference signal may cause, for example, unwanted beat sound.

Another description is now given as to how the modulated interference in which a frequency of 900 ± 5 MHz is modulated at 200 Hz at a duty ratio of 50%, as defined by the EN 55020/A12 standard, which is applied to the electronic device having a servo control mechanism described with reference to Fig. 3 may affect the signal line 53. For illustration of the modulated interference which affects the component circuits, the modulated interference is classified into first modulated interference which affects the control head 52, and second modulated interference which affects the signal line 53 extending between the control head 52 and the input terminal 54a or 54b of the operational amplifier circuit 54.

The first modulated interference affects the control head 52. A signal S51 or S52 containing the interference signal superimposed thereon in the signal line 53 connected to the control head 52 is routed through the resistors R52 and R53 or the resistor R54 to the first control amplifier 55.

The second modulated interference affects the signal line 53. A signal S53 or S52 containing the interference signal superimposed thereon in the signal line 53 is routed through the resistor R53 or R54 to the first control amplifier 55.

The interference signal entering the first control amplifier 55 has the same frequency component as that of the CTL signal, and thus cannot be removed by the first control amplifier 55. Therefore, the interference signal is amplified as a signal, and is fed back via the resistor R56. The amplified signal is also input to the second control amplifier 56. The signal input to the second control amplifier 56 is not still removed by the second control amplifier 56, and is therefore output while still containing the interference signal.

Accordingly, if interference emission is added to an electronic device having a servo control mechanism, interference which comes through a variety of paths is detected by the operational amplifier circuit 54, and appears as a low-frequency signal component of 200 Hz, resulting in a poor signal-to-noise ratio. The low-frequency component of 200 Hz is within the bandwidth of the real signal for use in the audio signal, and cannot be thus removed by filters. Therefore, it is extremely difficult to remove an interference signal which is input to the first control amplifier 55 serving to amplify signals, thus leading to lower signal accuracy. In Fig. 3, the interference signal of 200 Hz which is added together with the real signal is amplified to produce the peak signal. Once played back, the interference signal may cause, for example, beat sound.

### SUMMARY OF THE INVENTION

Accordingly, an embodiment of the present invention seeks to remove interference before it is amplified and converted to eliminate the influence (adverse effect) thereof on the desired signal. Another embodiment of the present invention seeks to provide a filter-type arrangement which can be mounted on a substrate to enhance stabilization regardless of the bonding state and which is inexpensive.

In one aspect of the present invention, an audio signal playback circuit with interference removal includes an operational amplifier having an equalizer amplifier for amplifying a signal from a head, a signal line for supplying the signal to the operational amplifier, a power supply line for supplying power to the operational amplifier, and filters for detecting and attenuating the 900 ± 5 MHz frequency band. The filters are placed on the power supply line at and/or before a port of the power supply line connected to the operational amplifier and on the signal line at and/or before a port of the signal line connected to the operational amplifier.

The filters preferably incorporate a T-filter in the port of the signal line which is connected to the input terminal of the equalizer amplifier.

The T-filter may be formed of coils and a capacitor. Two coils which are connected in series to each other are inserted between the signal line and the input terminal of the equalizer amplifier. The capacitor has one end connected to the node between the coils and the other end coupled to ground.

Preferably, the coils are 47 nH inductors.

The filters may include a filter having coils inserted in the signal line connected to the head.

In another aspect of the present invention, an audio device includes a recorder/player for recording and playing back an audio signal, and an interference remover for removing an interference signal when the audio signal is played back by the recorder/player. The audio device further includes an operational amplifier having an equalizer amplifier for amplifying a signal from a head. The interference remover includes filters for detecting and attenuating the 900 MHz frequency band. The filters are placed on a signal line at and/or before a port of the signal line connected to the operational amplifier and on a power supply line at and/or before a port of the power supply line connected to the operational amplifier.

The filters preferably incorporate a T-filter in the port of the signal line connected to the input terminal of the equalizer amplifier.

The T-filter may be formed of coils and a capacitor. Two coils which are connected in series to each other are inserted between the signal line and the input terminal of the equalizer amplifier. The capacitor has one end connected to the node between the coils and the other end coupled to ground.

Preferably, the coils are 47 nH inductors.

The filters may include a filter having coils inserted in the signal line connected to the head.

In another aspect of the present invention, a servo-control CTL signal playback circuit having a control amplifier for inputting and amplifying a CTL signal provided by a control head via a signal line includes a filter for detecting and attenuating the 900 MHz frequency band. The filter is placed at and/or before a port of the signal line connected to the control amplifier.

The filter preferably includes a ferrite bead inductor.

Preferably, the ferrite bead inductor has an impedance of about 100 Ω at 900 MHz.

In another aspect of the present invention, an electronic device having a servo control mechanism includes an amplifier circuit for amplifying a signal generated by playing back a CTL signal using a control head, the CTL signal being recorded in a recording medium, a servo control unit for controlling a servo in response to the signal amplified by the amplifier circuit, and a filter for detecting and attenuating the 900 MHz frequency band. The filter is placed at and/or before a port of a signal line for inputting the signal played back by the control head to the amplifier circuit.

The filter preferably includes a ferrite bead inductor.

Preferably, the ferrite bead inductor has an impedance of about 100 Ω at 900 MHz.

Accordingly, an audio signal playback circuit includes filters on a power supply line and on a signal line before an operational amplifier circuit. A servo-control CTL signal playback circuit or an electronic device having a servo control mechanism includes filters before a port at which a CTL signal is input to a control amplifier via a signal line. The filters in accordance with embodiments of the present invention allow an interference signal in the 900 MHz band to be removed or attenuated before the signal is processed. Furthermore, the received signal can be amplified so that a modulated low-frequency signal in the 900 MHz band, for example, a 200 Hz band interference signal, which cannot be attenuated or removed by the operational amplifier circuit or the control amplifier since it has the same frequency component as that of the normal signal to be amplified may not affect the received signal or may be negligible for practical use.

### BRIEF DESCRIPTION OF THE DRAWINGS

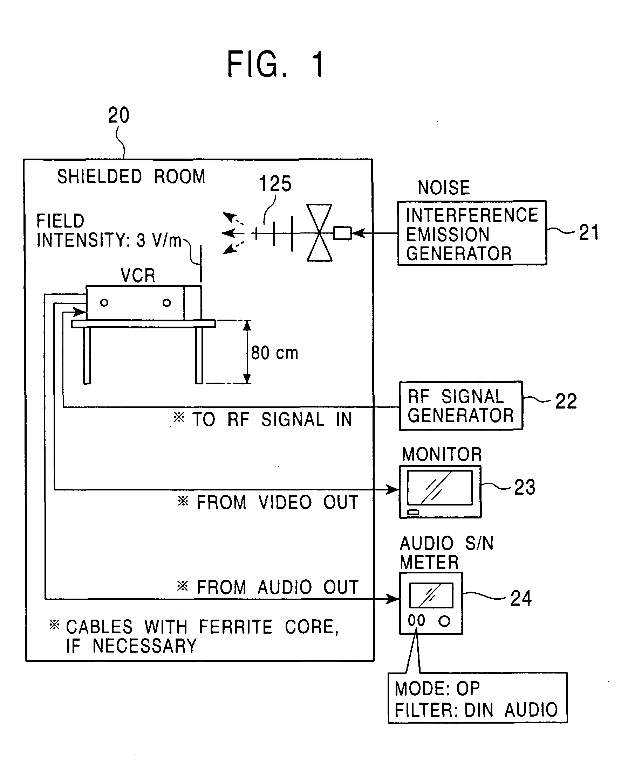

Fig. 1 is a schematic view of a measurement mechanism which conforms to the EN 55020/A12 standard;
Fig. 2 is a block diagram of an audio signal playback circuit in the related art which does not incorporate a mechanism for removing or attenuating an interference signal in the 900 MHz band;
Fig. 3 is a schematic block diagram of an electronic device having a servo control mechanism in the related art;
Fig. 4 is a graph plotted by observed values showing the output waveform of the signal in the circuit shown in Fig. 2, as defined by the EN 55020/A12 standard;
Fig. 5 is a spectrum of the interference signal in the circuit structure shown in Fig. 2, which is measured by a measurement approach in conformity to the EN 55020/A12 standard;
Fig. 6 is a block diagram of the structure of an audio device including an audio signal playback circuit according to an embodiment of the present invention;

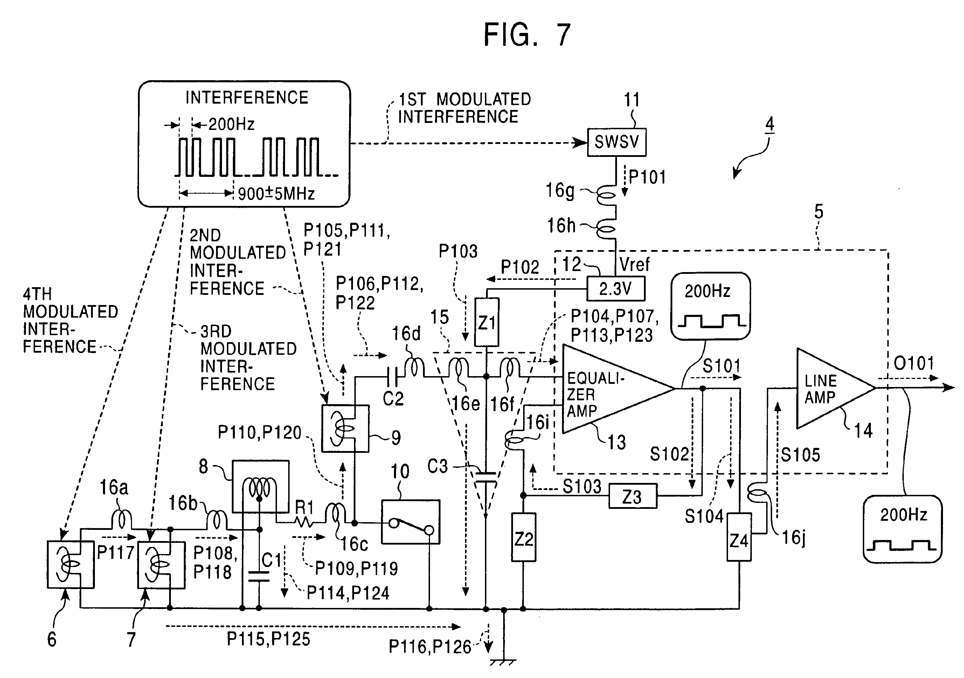

Fig. 7 is a schematic block diagram of the audio signal playback circuit shown in Fig. 6, showing the routing of the interference signal;

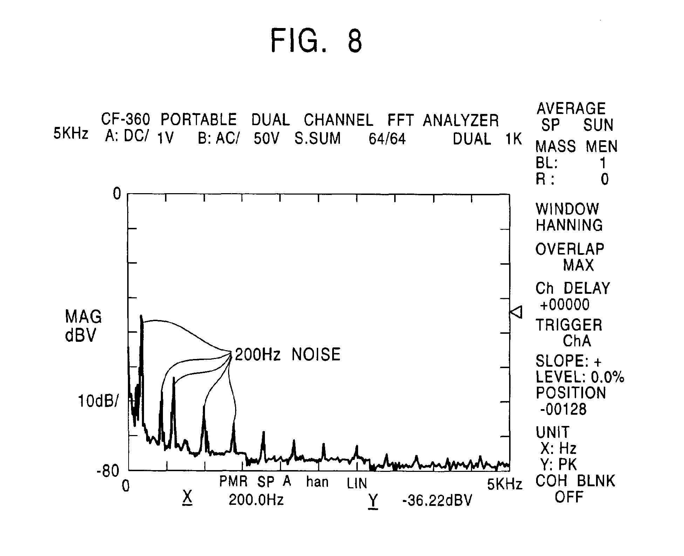

Fig. 8 is a spectrum of the interference signal in the circuit structure shown in Fig. 7, which is measured by a measurement approach in conformity to the EN 55020/A12 standard;

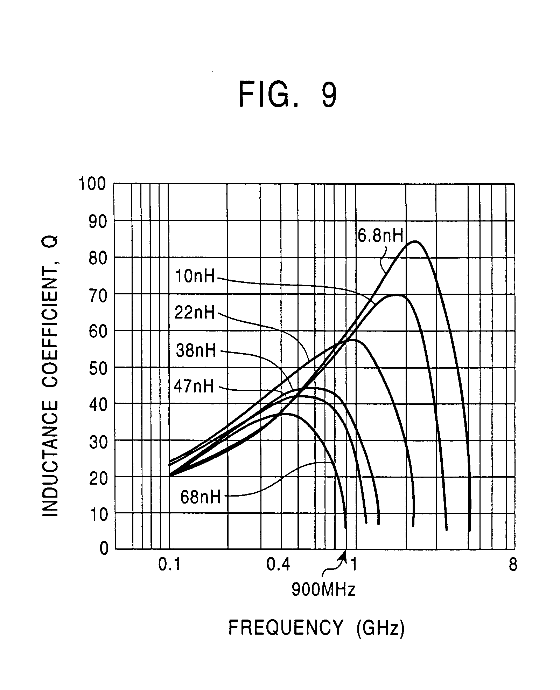

Fig. 9 is a graph showing inductance coefficient, Q, versus frequency of a coil used in a filter for removing and attenuating the interference signal;

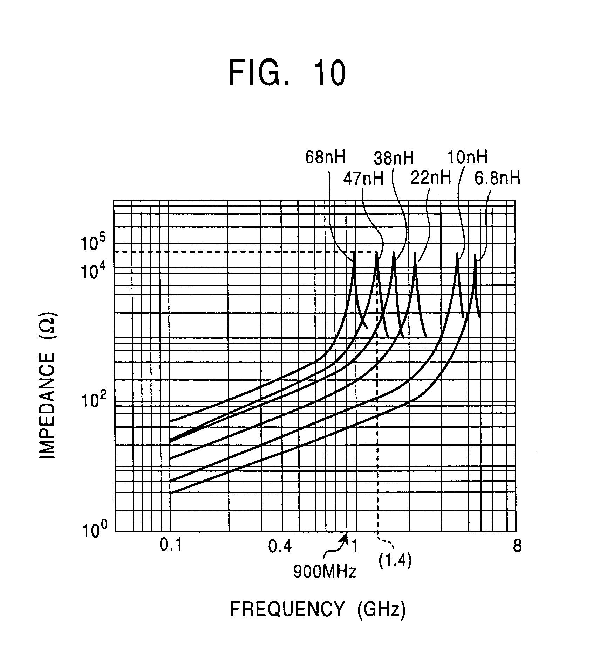

Fig. 10 is a graph showing impedance (() versus frequency of a coil used in a filter for removing and attenuating the interference signal;

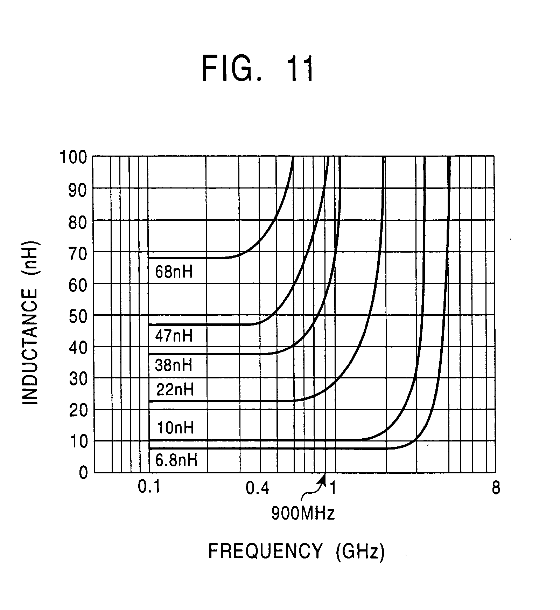

Fig. 11 is a graph showing inductance (nH) versus frequency of a coil used in a filter for removing and attenuating the interference signal; and

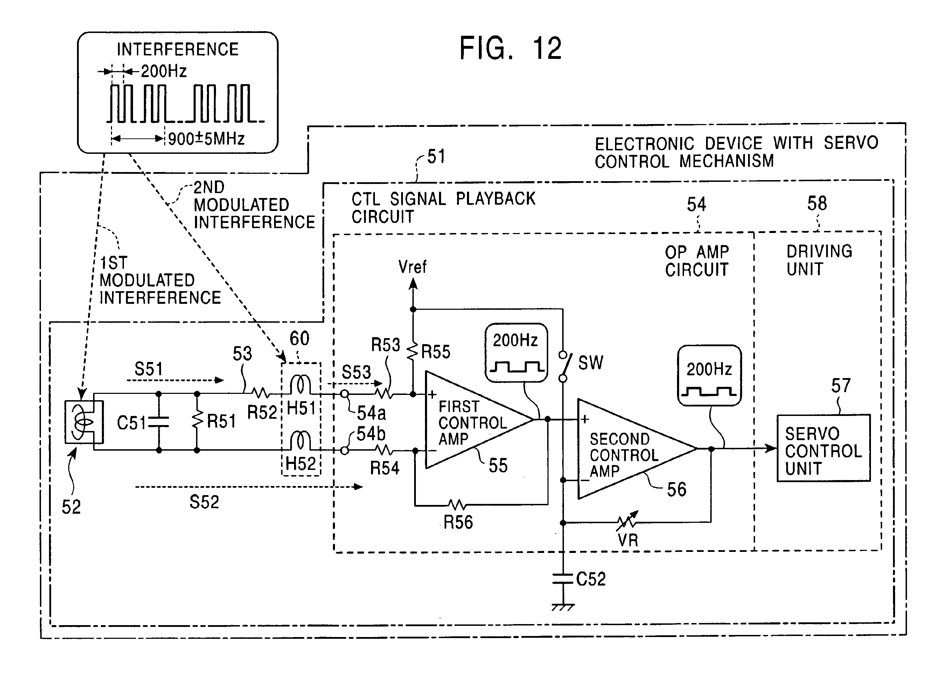

Fig. 12 is a schematic block diagram of an electronic device having a servo control mechanism according to an embodiment of the present invention.

### DESCRIPTION OF THE PREFERRED EMBODIMENTS

An audio signal playback circuit and an audio device having an interference removal mechanism according to a first embodiment of the present invention are described with reference to the drawings.

An audio signal playback circuit according to an embodiment of the present invention can be incorporated in an electronic device, particularly, an AV device to be regulated according to the EN 55020/A12 standard, which is applied to an audio device in an implementation, such as a VTR (video tape recorder) or a tape recorder (such as a receiver) having a tuner. The audio signal playback circuit can be further used for an electronic device having an analog (AM-modulated) audio recording system such as a video camera (VHS-C) which will be regulated in the future, which is applied to an audio device in an implementation.

Referring to Fig. 6, an audio device 1 according to the first embodiment includes a recorder/player 2 having an audio signal playback circuit 4 capable of recording and playing back an audio signal, and an interference remover 3 for removing interference which may affect the audio signal played back by the recorder/player 2. Other components are omitted.

Referring to Fig. 7, the audio signal playback circuit 4 includes an operational amplifier circuit 5 which is incorporated in an audio IC chip connected to an audio erase head 6, a full erase head 7, and an audio head 9.

The operational amplifier circuit 5 includes a 2.3 V power supply 12 which receives a power supply voltage from a 5 V switching regulator 11 to generate a reference voltage of 2.3 V, an equalizer amplifier 13 which receives and amplifies signals from a T-filter 15 and coils which function as interference removers and from the heads 6, 7, and 9, and a line amplifier 14.

In the audio playback circuit 4, the audio erase head 6, the full erase head 7, and a capacitor C1 are connected in parallel to each other. A first coil 16a serving as an interference-removing filter is inserted between the audio erase head 6 and the full erase head 7. A second coil 16b serving as an interference-removing filter is inserted between the full erase head 7 and the coil C1. The node between the second coil 16b and the capacitor C1 is connected to the midpoint of a bias transformer 8. The bias transformer 8 has one end connected to the grounded end of the parallel connection of the audio erase head 6 and the full erase head 7, and the other end connected to the parallel connection of the audio erase head 6 and the full erase head 7 via a resistor R1, a third coil 16c serving as an interference removal filter, and a switch 10. The node between the third coil 16c and the switch 10 is connected to one end of the audio head 9. The other end of the audio head 9 is connected to a first input terminal of the equalizer amplifier 13 via a capacitor C2, a fourth coil 16d serving as an interference removing filter, and a T-filter 15 serving as an interference removing filter. The T-filter 15 includes a fifth coil 16e, a sixth coil 16f, and a capacitor C3. The fifth coil 16e and the sixth coil 16f which are connected in series are inserted between the fourth coil 16d on a signal line and the first input terminal of the equalizer amplifier 13. One end of the capacitor C3 is connected to the node between the fifth coil 16e and the sixth coil 16f, and the other end of the capacitor C3 is coupled to ground. The node between the fifth coil 16e and the sixth coil 16f of the T-filter 15 is also connected to the 2.3 V power supply 12 via a load Z1. A seventh coil 16g and an eighth coil 16h which are connected in series and which serve as interference removing filters are inserted on a power supply line between the 2.3 V power supply 12 and the external 5 V switching regulator 11. A second input terminal of the equalizer amplifier 13 is coupled to ground via a ninth coil 16i serving as an interference removing filter and a load Z2. The output terminal of the equalizer amplifier 13 is connected to the node between the ninth coil 16i and the load Z2 via a load Z3. The output terminal of the equalizer amplifier 13 is coupled to ground via a load Z4, and is also connected to the input terminal of the line amplifier 14 via the load Z4 and a tenth coil 16j serving as an interference removing filter. The output terminal of the line amplifier 14 is connected to an external terminal (not shown).

In the audio signal playback circuit 4 having such a structure and connection, signals from the heads 6, 7, and 9 are amplified by the equalizer amplifier 13, and are then output via the line amplifier 14. However, the first to fourth coils 16a to 16d and the seventh to tenth coils 16h to 16j, and the T-filter 15 are provided on the signal lines which supplies the signals to the operational amplifier circuit 5 and on the power supply line which supplies power to the operational amplifier circuit 5 in order to attenuate a 900 ± 5 MHz frequency band signal, thereby removing or attenuating the interference signal before it is input to the operational amplifier circuit 5.

The routing of the interference signal to be removed or attenuated is described below with reference to Fig. 7. As described in the previous section, the interference signal is generated by modulating a frequency of 900 ± 5 MHz at 200 Hz at a duty ratio of 50%, as defined by the EN 55020/A12 standard. For illustration of the modulated interference which is attenuated on the circuit components, the modulated interference is classified into first modulated interference which affects the power supply line, second modulated interference which affects the signal line of the audio head 9, third modulated interference which affects the full erase head 7, and fourth modulated interference which affects the signal line of the audio erase head 6.

The first modulated interference affecting the 5 V switching regulator 11 itself is attenuated by the seventh and eighth coils 16g and 16h on the power supply line between the switching regulator 11 and the 2.3 V reference voltage 12. It is still routed through the 2.3 V reference voltage 12 in the operational amplifier circuit 5 and the load Z1, and is then attenuated by the T-filter 15 before it is input to the equalizer amplifier 13. The routing is depicted by arrows P101, P102, P103, and P104, in the stated order.

The second modulated interference is superimposed on a signal in the signal line of the audio head 9. A signal containing the interference signal is routed through the capacitor C2, and is then attenuated by the fourth coil 16d. The resulting signal is further attenuated by the T-filter 15 before it is input to the equalizer amplifier 13. The routing is depicted by arrows P105, P106, and P107, in the stated order.

The third modulated interference which is superimposed on a signal in the signal line of the full erase head 7 is attenuated by the second coil 16b. The resulting signal is routed through the bias transformer 8 and the resistor R1, and is then attenuated by the third coil 16c. The signal is further routed through the audio head 9 and the capacitor C2, and is further attenuated by the fourth coil 16d and by the T-filter 15, before it is input to the equalizer amplifier 13. The routing is depicted by arrows P108, P109, P110, P111, P112, and P113, in the stated order. The superimposed signal in the full erase head 7, which is attenuated by the second coil 16b, is routed through the capacitor C1 to ground, as depicted by arrows P108, P114, P115, and P116, in the stated order.

The fourth modulated interference which is superimposed on a signal in the signal line of the audio erase head 6 is attenuated by the first and second coils 16a and 16b. The resulting signal is routed through the bias transformer 8 and the resistor R1, and is then attenuated by the third coil 16c. The signal is further routed through the audio head 9 and the capacitor C2, and is then attenuated by the fourth coil 16d and by the T-filter 15, before it is input to the equalizer amplifier 13. The routing is depicted by arrows P117, P118, P119, P120, P121, P122, and P123, in the stated order. The interference signal superimposed in the audio erase head 6 is attenuated by the first and second coils 16a and 16b, and is then routed through the capacitor C1 to ground so that the interference signal is erased. The routing is depicted by arrows P117, P118, P124, P125, and P126, in the stated order.

The signal containing interference which has been attenuated in this way by the coils and the T-filter 15 is passed to the equalizer amplifier 13 and the line amplifier 14, where it is attenuated together with the normal signal, and is fed back via the load Z3, as depicted by S101, S102, and S103, in the stated order. The attenuated signal is also input to the line amplifier 14 via the load Z4 and the tenth coil 16j, as depicted by S101, S104, and S105, in the stated order. In the case that the load Z4 external to the operational amplifier circuit 5 is used, as described above, the signal lines connected to the load Z4 would be affected by interference, and the signal should be therefore attenuated by the tenth coil 16j at the port to the line amplifier 14 before it is input to the line amplifier 14. Since the signal input to the line amplifier 14 contains the interference signal which has been attenuated, the signal is output (O101) while the attenuated interference signal is negligible.

Accordingly, the signal is amplified by the equalizer amplifier 13 while the interference contained therein has been attenuated at the input therefor. As shown in Fig. 8, the interference signal (200 Hz noise) contained in the amplified signal is small enough to be negligible compared to the peak signal shown in Fig. 5 as previously described with respect to the related art. The influence thereof on the normal signal can be therefore reduced, and the resulting interference signal is substantially negligible. This ensures a signal-to-noise ratio of 40 dB which satisfies the EN 55020/A12 standard.

Accordingly, if interference is added during playback of audio signals, interference which comes not only from a group of the player heads but also through a variety of paths would be attenuated. A coil used for the attenuation would be preferably an inductor which effectively acts on 900 ± 5 MHz interference as regulated according to the EN 55020/A12 standard, namely, a 47 nH inductor. Preferably, for example, this inductor has an inductance coefficient of 40 at a frequency of 0.4 GHz in the inductance coefficient, Q, versus frequency as shown in Fig. 9, and an impedance ranging from 10⁴ to 10⁵ at a frequency of 1.4 GHz in the impedance versus frequency as shown in Fig. 10. Furthermore, preferably, as shown in Fig. 11, the inductor has an inductance sharply increasing at a frequency of 1.4 GHz in the inductance versus frequency.

In the first embodiment, a filter useful to attenuate an interference signal is implemented as a 47 nH inductor, but is not limited thereto. The filter may be implemented as a device, such as a ferrite bead, capable of attenuating a frequency in the 900 MHz band. In the first embodiment, the T-filter 15 arranged at the port to the equalizer amplifier 13 is a combination of discrete components, but is not limited thereto. The T-filter 15 may be implemented as a single three-terminal filter having a filtering characteristic with respect to the 900 MHz band.

An electronic device having a servo-control CTL signal playback circuit and a servo control mechanism according to a second embodiment of the present invention is described with reference to Fig. 12. The same reference numerals designate the same components as those in the related art as described with reference to Fig. 3.

An electronic device having a servo-control CTL signal playback circuit and a servo control mechanism according to an embodiment of the present invention may be a device to be regulated according to the EN 55020/A12 standard as previously described with reference to Fig. 3, such as a VTR (video tape recorder) having a servo control mechanism. The electronic device can be further used for a video camera (VHS-C) which will be regulated in the future, or any other device for recording a CTL signal for servo control.

Referring to Fig. 12, an electronic device 1 having a servo control mechanism which includes a servo-control CTL signal playback circuit in an implementation at least includes a CTL signal playback circuit 51 for playing back a CTL signal provided by a control head 52, a driving unit 58 including a servo control unit 57 for controlling a motor and the like in response to the CTL signal, and a filter 60 on a signal line 53 between the control head 52 and the CTL signal playback circuit 51.

The CTL signal playback circuit 51 includes the control head 52 which plays back a CTL signal which is recorded in a servo control recording medium based on a CTL signal, and an operational amplifier circuit 54 connected to the control head 52 via the signal line 53.

The operational amplifier circuit 54 includes a first control amplifier 55 which receives and amplifies the signal from the control head 52 via the signal line 53, and a second control amplifier 56 which receives and amplifies the signal amplified by the first control amplifier 55 and a supply voltage Vref.

The filter 60 is placed on the signal line 53, which extends from both ends of the control head 52, between the control head 52 and the CTL signal playback circuit 51, before the input terminals 54a and 54b of the operational amplifier circuit 54, and includes ferrite bead inductors H51 and H52. The ferrite bead inductors H51 and H52 are made of a material adapted so that noise can be converted into heat and absorbed, and are equivalent to resistors at a high-frequency region.

In the CTL signal playback circuit 51, the control head 52, a capacitor C51, and a resistor R51 are connected in parallel to each other. A first end of the parallel connection is connected via a resistor R52 and the ferrite bead inductor H51 to the input terminal 54a of the operational amplifier circuit 54 which is coupled to the non-inverting input terminal of the first control amplifier 55, and a second end thereof is connected via the ferrite bead inductor H52 to the input terminal 54b of the operational amplifier circuit 54 which is coupled to the inverting input terminal of the first control amplifier 55.

In the operational amplifier circuit 54, the non-inverting input terminal of the first control amplifier 55 is connected to the terminal 54a connected to the first end of the control head 52 via a resistor R53, and the inverting input terminal thereof is connected to the terminal 54b connected to the second end of the control head 52 via a resistor R54. The output terminal of the first control amplifier 55 is connected to the non-inverting input terminal of the second control amplifier 56. The inverting input terminal of the second control amplifier 56 is coupled to ground via a capacitor C52, and is also connected to the output terminal thereof via a variable resistor VR. The output terminal of the second control amplifier 56 is connected to the servo control unit 57 in the driving unit 58.

In the operational amplifier circuit 54 having such a structure and connection, a modulated interference signal comprising a low-frequency signal which is modulated at the 900 MHz band and which is contained in the signal from the control head 52 is attenuated or removed by the ferrite bead inductors H51 and H52. The resulting signal is then input to the first control amplifier 55 and the second control amplifier 56, and is amplified. The amplified CTL signal is then delivered to the servo control unit 57.

A description is now given as to how the modulated interference in which a frequency of 900 ± 5 MHz is modulated at 200 Hz at a duty ratio of 50%, which is applied to the electronic device shown in Fig. 12, may affect the signal line 53 in the measurement technique in conformity to the EN 55020/A12 standard shown in Fig. 1. For illustration of the modulated interference which affects the circuit components, the modulated interference is classified into first modulated interference which affects the control head 52, and second modulated interference which affects the signal line 53 extending between the control head 52 and the input terminal 54a or 54b of the operational amplifier circuit 54.

The first modulated interference affects the control head 52. A signal S51 or S52 containing the interference signal superimposed thereon in the signal line 53 connected to the control head 52 is attenuated or removed by the ferrite bead inductor H51 or H52 in the filter 60, and is then input to the first control amplifier 55 via the resistors R52 and R53, or the resistor R54.

The second modulated interference affects the signal line 53. A signal S53 or S52 containing the interference signal superimposed thereon in the signal line 53 is also attenuated or removed by the ferrite bead inductor H51 or H52 in the filter 60, as in the first modulated interference, and is then input to the first control amplifier 55 via the resistor R53 or R54.

The interference signal entering the first control amplifier 55 has the same frequency component as that of the CTL signal, and thus cannot be removed by the first control amplifier 55. However, the signal would have level which may be negligible if it is amplified. Therefore, if this signal is amplified as a signal, and is fed back via the resistor R56, it would not affect the amplified CTL signal. The amplified signal, in which the interference signal is attenuated or removed, is input to the second control amplifier 56. The signal input to the second control amplifier 56 is output from the second control amplifier 56 while still containing the interference signal which is substantially negligible.

Accordingly, if interference emission is added to an electronic device having a servo control mechanism, interference which comes through a variety of paths is detected by the operational amplifier circuit 54, and appears as a low-frequency signal component (200 Hz in a measurement test), resulting in a poor signal-to-noise ratio. This low-frequency component is within the bandwidth of the real signal for use in the CTL signal, and cannot be thus removed by filters. Therefore, an interference signal is removed on the signal line 53 before it is input to the first control amplifier 55 serving to amplify signals, thereby achieving a circuitry which does not suffer from the influence of radio waves in the 900 MHz band without deterioration of signal accuracy.

As described above, therefore, an audio signal playback circuit and an audio device having an interference removal feature in accordance with the first embodiment includes filters for attenuating an interference signal in the 900 MHz band which are placed on a signal line and a power supply line at the ports to an operational amplifier. The filters enable a signal having the same frequency bandwidth as an audio signal to be removed or attenuated before it is input to the operational amplifier.

An electronic device having a servo-control CTL signal playback circuit and a servo control feature in accordance with the second embodiment includes a filter, such as a ferrite bead inductor, for attenuating an interference signal in the 900 MHz band which is placed on a signal line at or before the port to a control amplifier. The filter enables an interference signal having the same frequency bandwidth as a CTL signal to be removed or attenuated before it is input to the control amplifier.

Therefore, a circuit structure and a device which satisfies the EN 55020/A12 standard can be achieved.

## Claims

1. An audio signal playback circuit with interference removal, comprising:
an operational amplifier having an equalizer amplifier for amplifying a signal from a head;
a signal line for supplying the signal to said operational amplifier;
a power supply line for supplying power to said operational amplifier; and
filter means for detecting and attenuating the 900 □ } 5 MHz frequency band,
wherein said filter means is provided on the power supply line at least at and before a port of the power supply line connected to said operational amplifier and on the signal line at least at and before a port of the signal line connected to said operational amplifier.

2. An audio signal playback circuit according to Claim 1, wherein said filter means incorporates a T-filter at and before the port of the signal line which is connected to the input terminal of the equalizer amplifier.

3. An audio signal playback circuit according to Claim 2, wherein the T-filter comprises coils and a capacitor, two coils which are connected in series to each other are inserted between the signal line and the input terminal of the equalizer amplifier, and the capacitor has one end connected to the node between the coils and the other end coupled to ground.

4. An audio signal playback circuit according to Claim 3, wherein the coils are 47 nH inductors.

5. An audio signal playback circuit according to Claim 2, wherein said filter means includes a filter having coils inserted in the signal line connected to the head.

6. An audio device comprising:
recording and playback means for recording and playing back an audio signal;
interference removing means for removing an interference signal when the audio signal is played back by said recording and playback means; and
an operational amplifier having an equalizer amplifier for amplifying a signal from a head,
wherein said interference removing means comprises filter means for detecting and attenuating the 900 MHz frequency band, the filter means being provided on a signal line at least at and before a port of the signal line connected to said operational amplifier and on a power supply line at least at and before a port of the power supply line connected to said operational amplifier.

7. An audio device according to Claim 6, wherein said filter means incorporates a T-filter at and before the port of the signal line connected to the input terminal of the equalizer amplifier.

8. An audio device according to Claim 7, wherein the T-filter includes coils and a capacitor, two coils which are connected in series to each other are inserted between the signal line and the input terminal of the equalizer amplifier, and the capacitor has one end connected to the node between the coils and the other end coupled to ground.

9. An audio device according to Claim 8, wherein the coils are 47 nH inductors.

10. An audio device according to Claim 7, wherein said filter means includes a filter having coils inserted in the signal line connected to the head.

11. A servo-control CTL signal playback circuit having a control amplifier for inputting and amplifying a CTL signal provided by a control head via a signal line, said servo-control CTL signal playback circuit comprising:
filter means for detecting and attenuating the 900 MHz frequency band, the filter means being placed at least at and before a port of the signal line connected to the control amplifier.

12. A servo-control CTL signal playback circuit according to Claim 11, wherein said filter means includes a ferrite bead inductor.

13. A servo-control CTL signal playback circuit according to Claim 12, wherein the ferrite bead inductor has an impedance of about 100 Ω at 900 MHz.

14. An electronic device having a servo control mechanism, comprising:
an amplifier circuit for amplifying a signal generated by playing back a CTL signal using a control head, the CTL signal being recorded in a recording medium;
a servo control unit for controlling a servo in response to the signal amplified by said amplifier circuit; and
filter means for detecting and attenuating the 900 MHz frequency band, the filter means being placed at least at and before a port of a signal line for inputting the signal played back by the control head to said amplifier circuit.

15. An electronic device according to Claim 14, wherein said filter means includes a ferrite bead inductor.

16. An electronic device according to Claim 15, wherein the ferrite bead inductor has an impedance of about 100 Ω at 900 MHz.
